# EUROPÄISCHE PATENTSCHRIFT

(11) **EP 3 539 141 B1**
(45) Veröffentlichungstag und Bekanntmachung des Hinweises auf die Patenterteilung: **19.08.2020**
(21) Anmeldenummer: 17800369.5
(22) Anmeldetag: 09.11.2017
(51) Int. Cl.: H01H 19/64, H01H 19/04

(54) **LASTTRENNSCHALTER**
LOAD BREAK SWITCH
SECTIONNEUR À COUPURE EN CHARGE

(30) Priorität: 09.11.2016 AT 5023616 U
(43) Veröffentlichungstag der Anmeldung: 18.09.2019
(73) Patentinhaber: Benedict Gesellschaft m.b.H., 1221 Wien (AT)
(72) Erfinder: BENEDICT, Alexander, 1130 Wien (AT)
(74) Vertreter: Sonn & Partner Patentanwälte
(86) Internationale Anmeldenummer: PCT/AT2017/060299
(87) Internationale Veröffentlichungsnummer: WO 2018/085873

(56) Entgegenhaltungen:
- DE-A1- 3 542 399
- US-A1- 2014 144 761
- US-A1- 2015 332 877

## Beschreibung

Die Erfindung betrifft einen Lasttrennschalter mit zumindest zwei Schaltmodulen, welche jeweils feststehende Schaltkontakte und bewegliche Schaltkontakte aufweisen, und mit einem Rastwerk, welches eine Antriebswelle zum Überführen der feststehenden und beweglichen Schaltkontakte zwischen einer Offen- und einer Schließstellung aufweist.

Weiters betrifft die Erfindung eine Photovoltaikanlage mit einem Photovoltaikmodul, einem Wechselrichter und einem Lasttrennschalter zwischen dem Photovoltaikmodul und dem Wechselrichter.

Lasttrennschalter sind im Stand der Technik seit langem in Verwendung. Beispielsweise offenbart die DE 10 2013 202 811 A1 einen Lasttrennschalter, welcher mehrere Polgehäuse aufweist. Die Polgehäuse weisen jeweils zwei Seitenwände auf, die über eine Vorderwand, eine Rückwand und zwei Stirnwände miteinander verbunden sind. Bei mehrpoligen Schaltern liegen mehrere solcher Polgehäuse seitlich aneinander an. Durch die Seitenwände verläuft eine Schaltwelle. In jedem Polgehäuse befindet sich ein Hebel, der um die Längsachse der Schaltwelle schwenkbar angeordnet ist. An den freien Enden des Hebels sind bewegliche Kontaktelemente angeordnet, die bei geschlossenem Schalter jeweils an einem feststehenden Kontaktelement anliegen. Die feststehenden Kontaktelemente sind mit Klemmeinheiten verbunden, in die von außen Anschlusskabel einsteckbar sind. Die Klemmeinheiten befinden sich beidseitig der Schaltwelle an den Stirnwänden der Polgehäuse, die Durchgangsöffnungen für die Anschlusskabel aufweisen.

Die AT 11 441 U1 beschreibt ein elektrisches Schaltrastwerk mit einem Hauptrastwerk, an welchem eine beliebige Anzahl von Schaltmodulen angeordnet werden kann, und mit einem Zusatzrastwerk, welches am Hauptrastwerk angeordnet ist. Im Hauptrastwerk ist eine Antriebswelle drehbar gelagert, welche über eine Kupplungseinrichtung mit den benachbarten Schaltmodulen gekoppelt ist, um ein simultanes Ein- und Ausschalten der Schaltmodule zu erzielen. In den Schaltmodulen sind drehbare Kontaktträger angeordnet, welche durch das Verschwenken der Antriebswelle den Schaltkontakt schließen oder öffnen. Auch bei diesem Stand der Technik werden mehrere Schaltmodule in getrennten Gehäusen nebeneinander angeordnet.

Weitere Schaltvorrichtungen sind aus US 2014/0144761 A1, DE 35 42 399 A1 und US 2015/0332877 A1 bekannt.

Ein Nachteil der im Stand der Technik angeführten Lasttrennschalter ist, dass der Schalter vergleichsweise große Außenabmessungen aufweist. Ferner ist der Materialverbrauch für die Herstellung des Schalters nachteilig. Weiters werden zusätzliche Verbindungselemente benötigt, um die einzelnen Gehäuse miteinander zu verbinden.

Demnach besteht die Aufgabe der vorliegenden Erfindung darin, zumindest einzelne Nachteile des Standes der Technik zu beseitigen oder zumindest zu lindern. Die Erfindung setzt sich daher insbesondere zum Ziel, einen Lasttrennschalter und eine Photovoltaikanlage der eingangs angeführten Art zu schaffen, welcher bzw. welche sich durch eine kompakte und materialsparende Bauart auszeichnet.

Diese Aufgabe wird durch einen Lasttrennschalter mit den Merkmalen von Anspruch 1 und eine Photovoltaikanlage gemäß Anspruch 12 gelöst. Bevorzugte Ausführungen sind in den abhängigen Ansprüchen angegeben.

Erfindungsgemäß sind zumindest zwei Schaltmodule gemeinsam in einem Innenraum eines äußeren Schaltergehäuses aufgenommen, wobei das äußere Schaltergehäuse eine vordere Wand und eine hintere Wand, jeweils mit Öffnungen zum Anschluss von Anschlussleitungen an die feststehenden Schaltkontakte, und zwei die vordere und die hintere Wand miteinander verbindende Seitenwände aufweist, wobei die vordere Wand, die hintere Wand und die Seitenwände einteilig ausgebildet sind. Die Schaltmodule können selbst innere Schaltmodulgehäuse aufweisen, an denen die feststehenden Schaltkontakte und die beweglichen Schaltkontakte angeordnet sind. Die inneren Schaltmodulgehäuse sind vollständig im Inneren des äußeren Schaltergehäuses angeordnet. Vorteilhafterweise können die Schaltmodulgehäuse wesentlich einfacher als beim Stand der Technik ausgeführt werden. Insgesamt kann eine kompaktere Anordnung der Schaltmodule ermöglicht werden, wodurch die Abmessungen des Lasttrennschalters reduziert werden können. Sind die Schaltmodule in einem einzigen äußeren Schaltergehäuse angeordnet, kann zusätzlich zu der kompakteren Bauweise vor allem auch auf solche Befestigungselemente verzichtet werden, welche bei herkömmlichen Lasttrennschaltern die einzelnen Gehäuse miteinander verbinden. Dadurch kann eine kostengünstigere und effizientere Fertigung ermöglicht werden. Durch die vereinfachte Bauart wird weiters der Zugang in das Innere des Lasttrennschalters vereinfacht.

Erfindungsgemäß weist das äußere Schaltergehäuse eine vordere Wand und eine hintere Wand, jeweils mit Öffnungen zum Anschluss von Anschlussleitungen an die feststehenden Schaltkontakte, und zwei die vordere und die hintere Wand miteinander verbindende Seitenwände auf, wobei die vordere Wand, die hintere Wand und die Seitenwände einteilig ausgebildet sind. Durch diese Bauart wird ein kostengünstiges und einfach herstellbares äußeres Schaltergehäuse realisiert. Weiters ist vorteilhaft, dass die Positionen der Öffnungen für die Anschlussleitungen relativ zu den feststehenden Kontakten der Schaltmodule präzise festgelegt werden können. Durch die einteilige Ausführung des Schaltergehäuses werden vorteilhafterweise keine Befestigungselemente benötigt, um die Wände des äußeren Schaltergehäuses miteinander zu verbinden.

Um eine besonders kompakte Bauart des Lasttrennschalters zu erreichen, weist das äußere Schaltergehäuse bevorzugt eine einteilig mit der vorderen Wand, der hinteren Wand und den Seitenwänden gebildete Bodenwand auf. Die Schaltmodule sind innerhalb des äußeren Schaltergehäuses angeordnet. Das äußere Schaltergehäuse ist somit als wannenförmige Schale ausgebildet, in welcher die Schaltmodule aufgenommen sind. Auf Seite gegenüberliegend der Bodenwand weist das äußere Schaltergehäuse bevorzugt eine Montageöffnung auf, durch welche die Schaltmodule in der Fertigung eingeschoben werden können. Vorteilhafterweise können separate Seitenwände sowie eine separate Bodenwand eingespart werden. Die bei mehrteiligen Schaltergehäusen erforderlichen Befestigungselemente, wie z.B. Schrauben, werden ebensowenig benötigt wie Bohrungen für solche Befestigungselemente. Durch diese Bauart wird die Herstellung und Konstruktion des Schaltergehäuses weiter vereinfacht. Weiters können Materialaufwand und Kosten gesenkt werden.

In einer weiteren Ausführungsform weist das äußere Schaltergehäuse an der Bodenwand einander zugewandte Haltevorsprünge zur Anordnung an einer Montageschiene auf. Dadurch kann das Schaltergehäuse auf einfache Art und Weise an der Montageschiene befestigt werden.

Um die Befestigung des erfindungsgemäßen Lasttrennschalters an der Montageschiene zu erleichtern, ist bevorzugt zumindest ein elastisch verformbarer Haltevorsprung zum Einschnappen in die Montageschiene vorgesehen. Durch die Eigenelastizität des Haltevorsprungs kann auf besonders einfache Weise ein Schnappmechanismus ermöglicht werden. Vorteilhafterweise werden zur Befestigung des Schaltergehäuses an der Montageschiene keine zusätzlichen Befestigungselemente benötigt, wodurch die Befestigung zuverlässig durchgeführt werden kann. Weiters kann auf aufwändige Führungen für bewegliche Haltevorsprünge verzichtet werden.

In einer besonders bevorzugten Ausführungsform weist das Rastwerk ein äußeres Rastwerkgehäuse auf, welches über eine lösbare Verbindung, vorzugsweise eine Schnappverbindung, mit dem äußeren Schaltergehäuse verbunden ist. Durch die Schnappverbindung wird eine schnell und einfach lösbare Verbindung vorgesehen, wobei insbesondere auf Schrauben verzichtet werden kann. Das Trennen oder Verbinden von äußerem Rastwerkgehäuse und äußerem Schaltergehäuse kann vorteilhafterweise werkzeuglos durchgeführt werden.

Das äußere Rastwerkgehäuse umfasst bevorzugt ein erstes Rastwerkgehäuseteil und ein zweites Rastwerkgehäuseteil, welche über eine weitere lösbare Verbindung, vorzugsweise eine weitere Schnappverbindung, miteinander verbunden sind. Damit können dieselben Vorteile wie bei der Schnappverbindung zwischen dem äußeren Rastwerkgehäuse und dem äußeren Schaltergehäuse erzielt werden. Das erste Rastwerkgehäuseteil kann insbesondere als Montagedeckel für das zweite Rastwerkgehäuseteil ausgebildet sein.

Das äußere Rastwerkgehäuse, insbesondere das zweite Rastwerkgehäuseteil, weist bevorzugt Abdeckungen für Klemmeinheiten zum Festklemmen von Anschlussleitungen an die feststehenden Schaltkontakte auf, wobei jede Abdeckung eine Ausnehmung zum Durchtritt eines Werkzeugs zur Betätigung der Klemmeinheit aufweist. Im Betriebszustand des Lasttrennschalters können somit von außen, durch die entsprechenden Öffnungen im Schaltergehäuse eingeführte Anschlussleitungen mit Hilfe der Klemmeinheit fixiert werden.

Bei einer weiteren bevorzugten Ausführungsform ist das äußere Rastwerkgehäuse insbesondere einteilig mit einem Befestigungsvorsprung zur Befestigung des Lasttrennschalters an einem Paneel, beispielsweise an einer Tür, verbunden. Der Befestigungsvorsprung ist bevorzugt koaxial um einen Längsabschnitt der Antriebswelle angeordnet. Das Paneel kann eine Durchgangsöffnung für den Befestigungsvorsprung aufweisen. In einem am Paneel montierten Zustand des Lasttrennschalters sind die Schaltwelle und der Befestigungsvorsprung durch die Durchgangsöffnung des Paneels geführt.

Der Lasttrennschalter weist zudem bevorzugt ein Halteelement auf welches im montierten Zustand des Lasttrennschalters auf der vom äußeren Rastwerkgehäuse abgewandten Seite des Paneels mit dem Befestigungsvorsprung verbunden ist. Vorteilhafterweise kann so der Lasttrennschalter werkzeuglos auf einfache Art und Weise, insbesondere auch ohne Verwendung einer Montageschiene, montiert werden. Bei dieser Ausführungsform sind die Schaltwelle und die darauf anordenbare Griffeinheit auf der einen Seite des Paneels und das äußere Rastwerkgehäuse des Lasttrennschalters auf der anderen Seite des Paneels angeordnet.

In einer bevorzugten Ausführung weist der Befestigungsvorsprung ein Gewinde auf, welches im montierten Zustand des Lasttrennschalters mit einem entsprechenden Gegengewinde des Halteelements verbunden ist. Das Halteelement kann hierbei insbesondere als Mutter ausgebildet sein. Diese Ausführung ist konstruktiv besonders einfach.

In einer weiteren bevorzugten Ausführung weist der Befestigungsvorsprung einen ersten Schnappverbinder auf, welcher im montierten Zustand des Lasttrennschalters an dem Paneel mit einem zweiten Schnappverbinder des Halteelements verbunden ist. Diese Ausführung hat insbesondere den Vorteil, dass der Lasttrennschalter besonders schnell und insbesondere fehlerfrei montiert werden kann. Im Unterschied zur Ausführungsvariante mit Gewinde kann vermieden werden, dass im Fall eines ungenügenden Drehmoments der Schalter nicht fest montiert ist.

Um eine besonders kompakte Bauart des Lasttrennschalters zu erreichen und den Materialaufwand weiter zu senken, weist das Rastwerk bevorzugt eine einteilig mit der Antriebswelle gebildete Antriebsscheibe auf. Dadurch wird die Anzahl der Komponenten des Lasttrennschalters weiter reduziert.

In einer besonders bevorzugten Ausführungsform ist der Lasttrennschalter zur Anordnung zwischen einem Photovoltaikmodul und einem Wechselrichter vorgesehen.

Die Erfindung wird nachstehend anhand eines bevorzugten Ausführungsbeispiels, auf das sie jedoch nicht beschränkt werden soll, weiter erläutert.
Fig. 1 zeigt eine schaubildliche Ansicht eines erfindungsgemäßen Lasttrennschalters, welcher ein äußeres Schaltergehäuse und ein äußeres Rastwerkgehäuse aufweist;
Fig. 2 zeigt eine Explosionsdarstellung des Lasttrennschalters gemäß Fig. 1;
Fig. 3 zeigt eine schaubildliche Ansicht der Unterseite des Lasttrennschalters gemäß Fig. 1, 2;
Fig. 4 zeigt eine schaubildliche Ansicht des Rastwerkgehäuses des Lasttrennschalters gemäß Fig. 1 bis 3;
Fig. 5 zeigt eine Explosionsdarstellung des Rastwerkgehäuses des Lasttrennschalters gemäß Fig. 1 bis 4;
Fig. 6 zeigt eine Ausführungsvariante des Lasttrennschalters, bei welcher eine Montage an einem Paneel mit Hilfe einer Mutter bewerkstelligt wird;
Fig. 7 zeigt eine weitere Ausführungsvariante des Lasttrennschalters, bei welcher die Montage an dem Paneel mit Hilfe einer Schnappverbindung bewerkstelligt wird; und
Fig. 8 zeigt eine weitere Ausführungsform des Lasttrennschalters in Explosionsdarstellung.

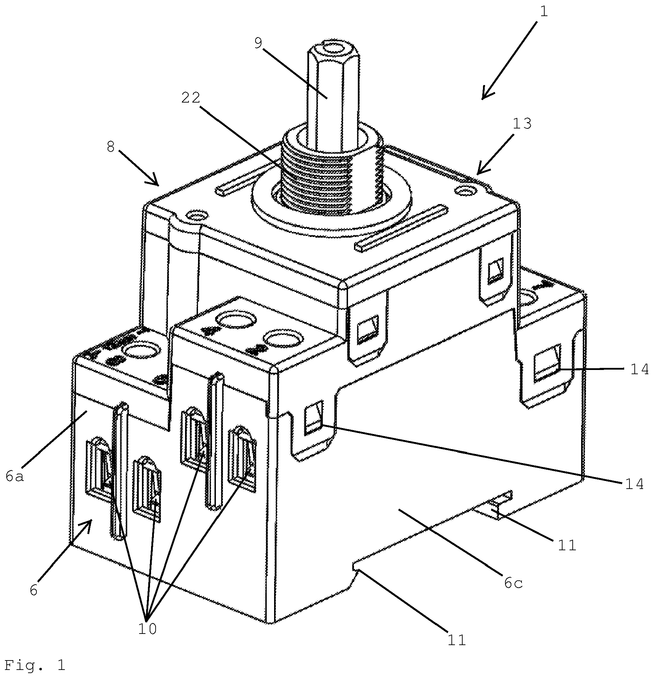

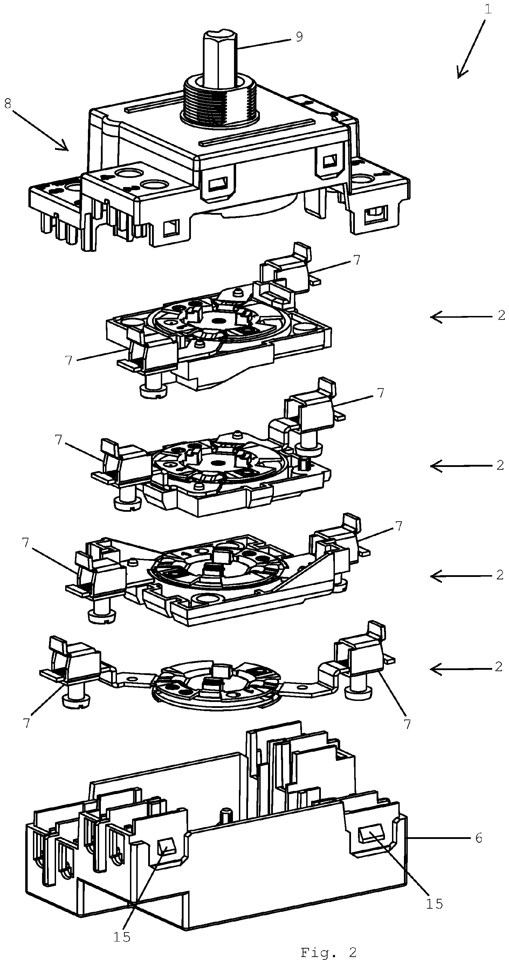

Fig. 1 zeigt einen Lasttrennschalters 1 in einem betriebsbereiten Zustand, Fig. 2 zeigt eine Explosionsdarstellung davon. Der Lasttrennschalter 1 weist in der gezeigten Ausführungsform vier Schaltmodule (Schalteinheiten 2 auf. Es kann jedoch ebenso eine Ausführung mit einer unterschiedlichen Anzahl von Schaltmodulen, beispielsweise mit zwei Schaltmodulen 2, vorgesehen sein. Jedes Schaltmodul 2 weist am Eingang des Lasttrennschalters 1 einen feststehenden, d.h. ortsfesten, Schaltkontakt 3 auf, der über einen beweglichen Schaltkontakt 4 mit einem feststehenden Schaltkontakt 3 am Ausgang des Lasttrennschalters 1 verbunden ist. Die beweglichen Schaltkontakte 4 sind an Schaltmodulgehäusen 5 gelagert, welche zusammen mit den feststehenden Schaltkontakten 3 innerhalb eines eine Außenhülle bildenden äußeren Schaltergehäuses 6 aufgenommen sind (vgl. Fig. 2). An den feststehenden Schaltkontakten 3 sind Klemmeinheiten 7 zum Festklemmen von Anschlussleitungen (nicht gezeigt) angeordnet.

Wie in den Figuren 1 und 2 ersichtlich, weist der Lasttrennschalter 1 ein Rastwerk, d.h. eine Rasteinheit, 8 zur Verrastung des Lasttrennschalters 1 in der Offenstellung bzw. in der Schließstellung auf. Das Rastwerk 8 weist grundsätzlich einen herkömmlichen Aufbau auf, so dass auf eine detaillierte Erläuterung davon verzichtet werden kann. Das Rastwerk 8 weist eine Antriebswelle 9 zum Überführen der feststehenden Schaltkontakte 3 und der beweglichen Schaltkontakte 4 zwischen einer die feststehenden Schaltkontakte 3 und die beweglichen Schaltkontakte 4 voneinander trennenden Offenstellung ("Aus"-Stellung) und einer die feststehenden Schaltkontakte 3 und die beweglichen Schaltkontakte 4 in elektrischen Kontakt bringenden Schließstellung ("Ein"-Stellung) auf. Die Antriebs- bzw. Schaltwelle 9 ist mit einem nicht dargestellten Drehgriff betätigbar. Der gezeigte Lasttrennschalter 1 ist beispielsweise zwischen einem Photovoltaikmodul und einem Wechselrichter anordenbar, um die erforderliche Trennung des Photovoltaikmoduls vom Wechselrichter zu ermöglichen.

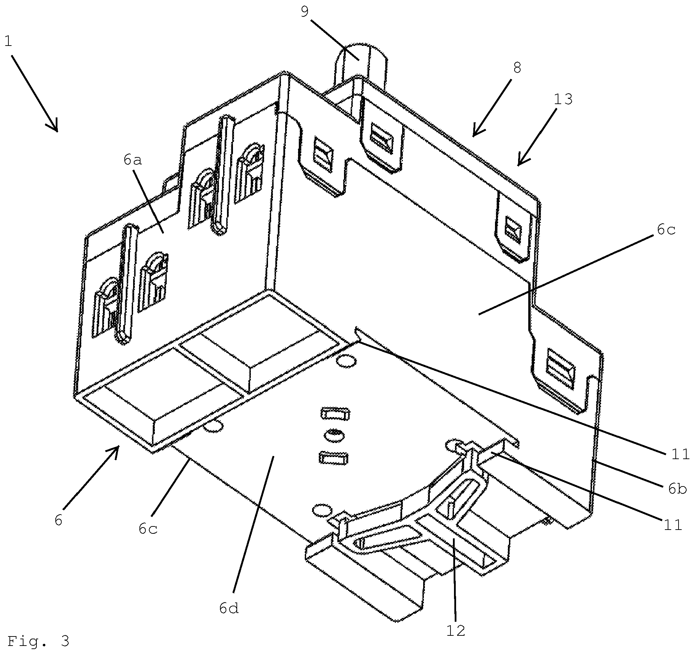

Wie in Fig. 3 ersichtlich, weist das äußere Schaltergehäuse 6 des Lasttrennschalters 1 eine vordere Wand 6a und eine hinteren Wand 6b auf, an denen jeweils Öffnungen 10 zum Anschluss von Anschlussleitungen an die feststehenden Schaltkontakte 3 ausgebildet sind. Die vordere Wand 6a und die hintere Wand 6b sind miteinander über Seitenwände 6c verbunden, wobei die vordere Wand 6a, die hintere Wand 6b und die Seitenwände 6c in der gezeigten Ausführung einteilig ausgebildet sind.

Ferner weist das äußere Schaltergehäuse 6, wie in Fig. 3 dargestellt, eine einteilig mit der vorderen Wand 6a, der hinteren Wand 6b und den Seitenwänden 6c gebildete Bodenwand 6d auf. Am äußeren Schaltergehäuse 6 sind an der Bodenwand 6d einander zugewandte Haltevorsprünge 11 vorgesehen, welche zur Anordnung des Lasttrennschalters 1 an einer Montageschiene (nicht gezeigt) dienen. In der gezeigten Ausführung ist an der Bodenwand 6d ein elastisch verformbarer Haltevorsprung 12 zum Einschnappen des Lasttrennschalters 1 in die Montageschiene vorgesehen.

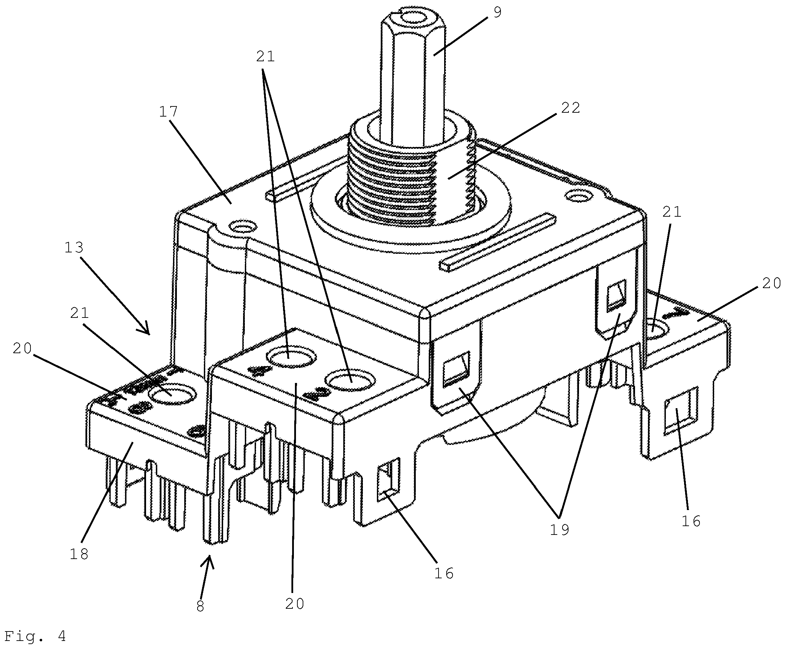

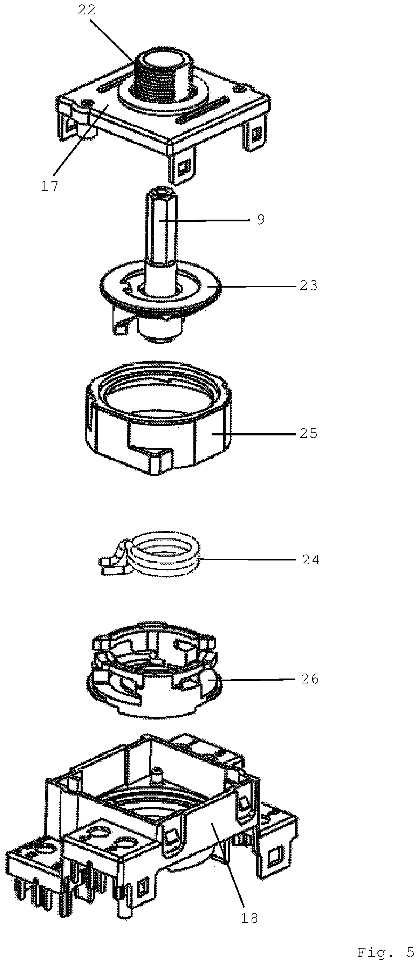

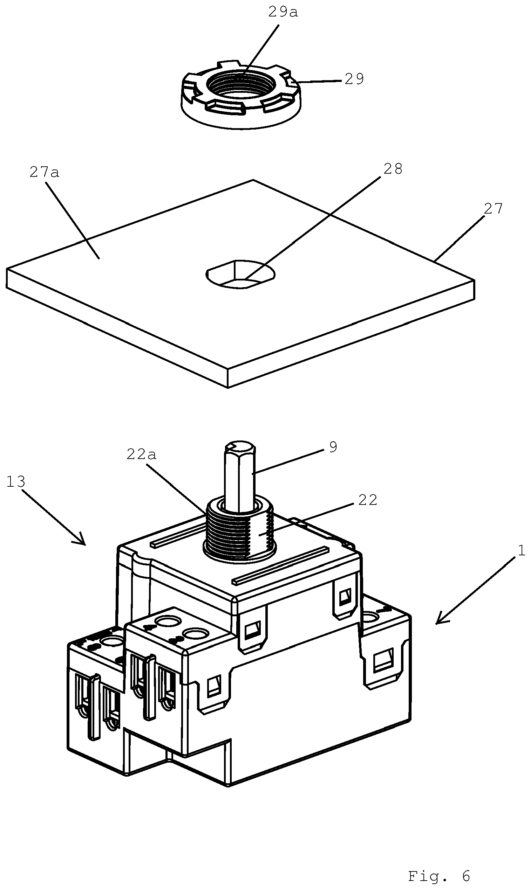

Wie in Fig. 4 und 5 ersichtlich, weist das Rastwerk 8 ein äußeres Rastwerkgehäuse 13 auf, welches über eine Schnappverbindung 14 mit dem äußeren Schaltergehäuse 6 verbunden ist. Die Schnappverbindung 14 weist elastisch verformbare Vorsprünge 15 auf, welche mit dazugehörigen Durchtrittsöffnungen 16 in Eingriff gebracht werden (Fig. 1). In der gezeigten Ausführung sind die elastisch verformbaren Vorsprünge 15 am äußeren Schaltergehäuse 6 und die zugehörigen Durchtrittsöffnungen 16 am äußeren Rastwerkgehäuse 13 angeordnet, wobei jedoch auch eine Anordnung der Vorsprünge 15 am äußeren Rastwerkgehäuse 13 und der Durchtrittsöffnungen 16 am äußeren Schaltergehäuse 6 möglich ist. Das äußere Rastwerkgehäuse 13 weist ein erstes Rastwerkgehäuseteil 17 und ein zweites Rastwerkgehäuseteil 18 auf, welche über eine weitere Schnappverbindung 19 miteinander verbunden sind. Das zweite Rastwerkgehäuseteil 18 weist Abdeckungen 20 für Klemmeinheiten 7 zum Festklemmen der Anschlussleitungen (nicht gezeigt) an die feststehenden Schaltkontakte 3 auf. Jede Abdeckung 20 hat eine Ausnehmung 21 zum Durchtritt eines Werkzeugs (beispielsweise eines Schraubenziehers) zur Betätigung der Klemmeinheit 7. Das erste Rastwerkgehäuseteil 17 ist in der gezeigten Ausführung einteilig mit einem (nachstehend in Zusammenhang mit Fig. 6 näher erläuterten) Befestigungsvorsprung 22 ausgebildet.

Wie in Fig. 5 ersichtlich, ist die Antriebswelle 9 weiters einteilig mit einer Antriebsscheibe 23 ausgebildet, wobei die Antriebswelle 9 zusammen mit einer Feder 24 und einem zweiteiligen Federgehäuse 25, 26 im Inneren des Rastwerkgehäuses 13 angeordnet ist.

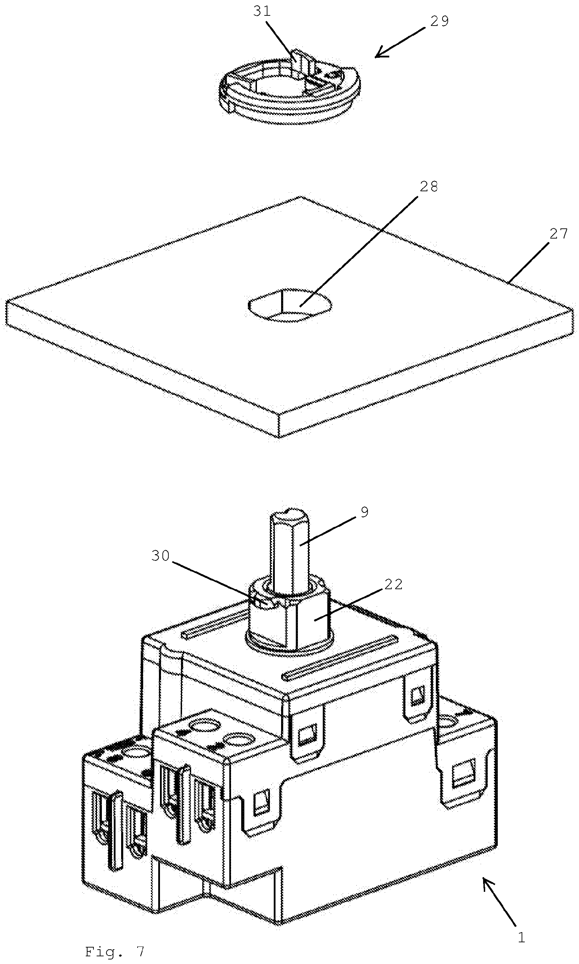

In den Fig. 6 und Fig. 7 sind zwei Ausführungsformen des Lasttrennschalters 1 gezeigt, welche jeweils zur Montage an einem Paneel 27 eingerichtet sind.

Wie in Fig. 6 ersichtlich, ist bei dieser Ausführungsform ein Halteelement 29 vorgesehen, welches im montierten Zustand des Lasttrennschalters 1 auf einer vom äußeren Rastwerkgehäuse 13 abgewandten Seite 27a des Paneels 27 mit dem Befestigungsvorsprung 22 verbunden ist. In dem am Paneel 27 montierten Zustand des Lasttrennschalters 1 sind die Schaltwelle 9 und der Befestigungsvorsprung 22 durch eine Durchgangsöffnung 28 des Paneels 27 geführt. In der Ausführung der Fig. 6 weist der Befestigungsvorsprung 22 ein Gewinde 22a auf, welches im montierten Zustand des Lasttrennschalters 1 mit einem entsprechenden Gegengewinde 29a des Halteelements 29 verschraubt ist. Das Halteelement 29 ist in dieser Ausführungsform als Mutter ausgebildet.

In Fig. 7 ist eine weitere Ausführungsform des Lasttrennschalters 1 gezeigt, bei welcher der Befestigungsvorsprung 22 einen ersten Schnappverbinder 30 aufweist, welcher im montierten Zustand des Lasttrennschalters 1 an dem Paneel 27 mit einem zweiten Schnappverbinder 31 des Halteelements 29 verbunden ist.

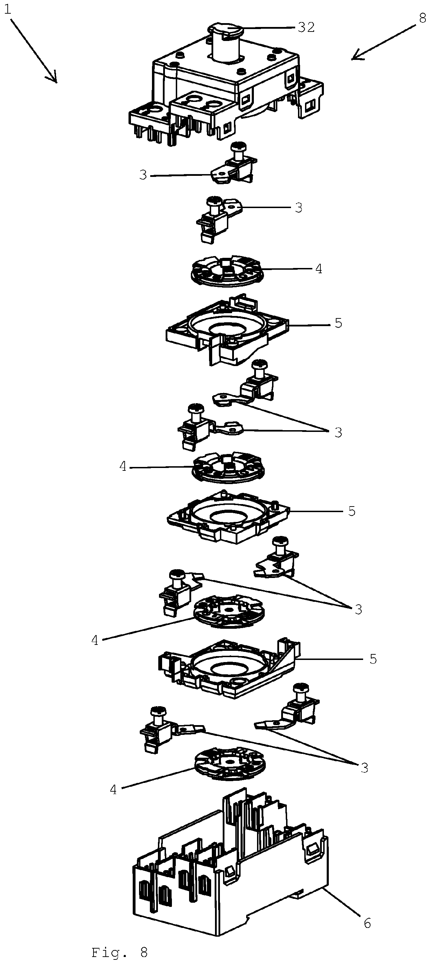

In Fig. 8 ist eine Ausführungsform gezeigt, bei der die Antriebswelle 9 mit einem Wellenstummel 32 ausgestaltet ist. Eine Griffeinheit (nicht gezeigt) wird mit dem Wellenstummel 32 in Eingriff gebracht, wobei durch Verschwenken der Griffeinheit die Antriebswelle 9 betätigt werden kann. Auf Grund der Form des Wellenstummels 32 ist ein Abziehen der Griffeinheit von dem Wellenstummel 32 im eingeschalteten Zustand des Lasttrennschalters 1 nicht möglich.

## Patentansprüche

1. Lasttrennschalter (1) mit zumindest zwei Schaltmodulen (2), welche jeweils feststehende Schaltkontakte (3) und bewegliche Schaltkontakte (4) aufweisen, und mit einem Rastwerk (8), welches eine Antriebswelle (9) zum Überführen der feststehenden (3) und beweglichen Schaltkontakte (4) zwischen einer Offen- und einer Schließstellung aufweist, **dadurch gekennzeichnet, dass** die zumindest zwei Schaltmodule (2) gemeinsam in einem Innenraum eines äußeren Schaltergehäuses (6) aufgenommen sind, wobei das äußere Schaltergehäuse (6) eine vordere Wand (6a) und eine hintere Wand (6b), jeweils mit Öffnungen (10) zum Anschluss von Anschlussleitungen an die feststehenden Schaltkontakte (3), und zwei die vordere (6a) und die hintere Wand (6b) miteinander verbindende Seitenwände (6c) aufweist, wobei die vordere Wand (6a), die hintere Wand (6b) und die Seitenwände (6c) einteilig ausgebildet sind.

2. Lasttrennschalter (1) nach Anspruch 1, **dadurch gekennzeichnet dass** das äußere Schaltergehäuse (6) eine einteilig mit der vorderen Wand (6a), der hinteren Wand (6b) und den Seitenwänden (6c) gebildete Bodenwand (6d) aufweist.

3. Lasttrennschalter (1) nach Anspruch 2, **dadurch gekennzeichnet dass** das äußere Schaltergehäuse (6) an der Bodenwand (6d) einander zugewandte Haltevorsprünge (11) zur Anordnung an einer Montageschiene aufweist.

4. Lasttrennschalter (1) nach Anspruch 3, **dadurch gekennzeichnet dass** zumindest ein elastisch verformbarer Haltevorsprung (12) zum Einschnappen in die Montageschiene vorgesehen ist.

5. Lasttrennschalter (1) nach einem der Ansprüche 1 bis 4, **dadurch gekennzeichnet, dass** das Rastwerk (8) ein äußeres Rastwerkgehäuse (13) aufweist, welches über eine lösbare Verbindung (14), vorzugsweise eine Schnappverbindung, mit dem äußeren Schaltergehäuse (6) verbunden ist.

6. Lasttrennschalter (1) nach Anspruch 5, **dadurch gekennzeichnet, dass** das äußere Rastwerkgehäuse (13) ein erstes Rastwerkgehäuse (17) und ein zweites Rastwerkgehäuseteil (18) aufweist, welche über eine weitere lösbare Verbindung (19), vorzugsweise eine weitere Schnappverbindung, miteinander verbunden sind.

7. Lasttrennschalter (1) nach Anspruch 5 oder 6, **dadurch gekennzeichnet, dass** das äußere Rastwerkgehäuse (13), insbesondere das zweite Rastwerkgehäuseteil (18), Abdeckungen (20) für Klemmeinheiten (7) zum Festklemmen von Anschlussleitungen an die feststehenden Schaltkontakte (3) aufweist, wobei jede Abdeckung eine Ausnehmung (21) zum Durchtritt eines Werkzeugs zur Betätigung der Klemmeinheit (7) aufweist.

8. Lasttrennschalter (1) nach einem der Ansprüche 5 bis 7, **dadurch gekennzeichnet, dass** das äußere Rastwerkgehäuse (13) insbesondere einteilig mit einem Befestigungsvorsprung (22) zur Befestigung des Lasttrennschalters (1) an einem Paneel (27), beispielsweise an einer Tür, verbunden ist.

9. Lasttrennschalter (1) nach Anspruch 8, **dadurch gekennzeichnet, dass** ein Halteelement (29) vorgesehen ist, welches im montierten Zustand des Lasttrennschalters (1) auf der vom äußeren Rastwerkgehäuse (13) abgewandten Seite (27a) des Paneels (27) mit dem Befestigungsvorsprung (22) verbunden ist.

10. Lasttrennschalter (1) nach Anspruch 9, **dadurch gekennzeichnet, dass** der Lastrennschalter (1) einen ersten Schnappverbinder (30) aufweist, welcher im montierten Zustand des Lasttrennschalters (1) an dem Paneel (27) mit einem zweiten Schnappverbinder (31) des Halteelements (29) verbunden ist.

11. Lasttrennschalter (1) nach einem der Ansprüche 1 bis 10, **dadurch gekennzeichnet, dass** das Rastwerk (8) eine einteilig mit der Antriebswelle (9) gebildete Antriebsscheibe (23) aufweist.

12. Photovoltaikanlage mit einem Photovoltaikmodul, einem Wechselrichter und einem Lasttrennschalter (1) zwischen dem Photovoltaikmodul und dem Wechselrichter, **dadurch gekennzeichnet, dass** der Lasttrennschalter (1) nach einem der Ansprüche 1 bis 11 ausgebildet ist.

## Claims

1. Load break switch (1) comprising at least two switching modules (2) which each have stationary switching contacts (3) and movable switching contacts (4), and comprising a latching mechanism (8) which has a drive shaft (9) for transferring the stationary switching contacts (3) and movable switching contacts (4) between an open position and a closed position, **characterised in that** the at least two switching modules (2) are accommodated together in an interior of an outer switch housing (6), the outer switch housing (6) having a front wall (6a) and a rear wall (6b), each comprising openings (10) for connecting connection lines to the stationary switching contacts (3), and two side walls (6c) which connect the front wall (6a) and the rear wall (6b) to one another, the front wall (6a), the rear wall (6b) and the side walls (6c) being formed in one piece.

2. Load break switch (1) according to claim 1, **characterised in that** the outer switch housing (6) has a bottom wall (6d) that is formed in one piece together with the front wall (6a), the rear wall (6b) and the side walls (6c).

3. Load break switch (1) according to claim 2, **characterised in that** the outer switch housing (6) has, on the bottom wall (6d), holding projections (11) that face one another for arrangement on a mounting rail.

4. Load break switch (1) according to claim 3, **characterised in that** at least one elastically deformable holding projection (12) is provided for snapping into the mounting rail.

5. Load break switch (1) according to any of claims 1 to 4, **characterised in that** the latching mechanism (8) has an outer latching-mechanism housing (13) which is connected to the outer switch housing (6) by means of a detachable connection (14), preferably a snap connection.

6. Load break switch (1) according to claim 5, **characterised in that** the outer latching-mechanism housing (13) has a first latching-mechanism housing (17) and a second latching-mechanism housing part (18), which are interconnected by means of a further detachable connection (19), preferably a further snap connection.

7. Load break switch (1) according to either claim 5 or claim 6, **characterised in that** the outer latching-mechanism housing (13), in particular the second latching-mechanism housing part (18), has covers (20) for clamping units (7) for clamping connection lines to the stationary switching contacts (3), each cover having a cut-out (21) for the passage of a tool in order to actuate the clamping unit (7).

8. Load break switch (1) according to any of claims 5 to 7, **characterised in that** the outer latching-mechanism housing (13) is connected, in particular in one piece, to a fastening projection (22) in order to fasten the load break switch (1) to a panel (27), for example to a door.

9. Load break switch (1) according to claim 8, **characterised in that** a holding element (29) is provided which, when the load break switch (1) is mounted, is connected to the fastening projection (22) on the side (27a) of the panel (27) that faces away from the outer latching-mechanism housing (13).

10. Load break switch (1) according to claim 9, **characterised in that** the load break switch (1) has a first snap connector (30) which, when the load break switch (1) is mounted, is connected to the panel (27) by means of a second snap connector (31) of the holding element (29).

11. Load break switch (1) according to any of claims 1 to 10, **characterised in that** the latching mechanism (8) has a drive wheel (23) that is formed in one piece together with the drive shaft (9).

12. Photovoltaic system comprising a photovoltaic module, an inverter, and a load break switch (1) between the photovoltaic module and the inverter, **characterised in that** the load break switch (1) is designed according to any of claims 1 to 11.

## Revendications

1. Sectionneur à coupure en charge (1) avec au moins deux modules de commutation (2), lesquels comportent respectivement des contacts de commutation (3) stationnaires et des contacts de commutation (4) mobiles, et avec un mécanisme d'encliquetage (8), lequel comporte un arbre d'entraînement (9) pour faire passer les contacts de commutation (3) stationnaires et les contacts de commutation (4) mobiles entre une position d'ouverture et une position de fermeture, **caractérisé en ce que** les au moins deux modules de commutation (2) sont logés conjointement dans un espace intérieur d'un boîtier de commutateur (6) extérieur, le boîtier de commutateur (6) extérieur comportant une paroi avant (6a) et une paroi arrière (6b), respectivement avec des ouvertures (10) pour la connexion de lignes de connexion aux contacts de commutation (3) stationnaires, et deux parois latérales (6c) raccordant l'une à l'autre la paroi avant (6a) et la paroi arrière (6b), la paroi avant (6a), la paroi arrière (6b) et les parois latérales (6c) étant formées en monobloc.

2. Sectionneur à coupure en charge (1) selon la revendication 1, **caractérisé en ce que** le boîtier de commutateur (6) extérieur comporte une paroi de fond (6d) formée en monobloc avec la paroi avant (6a), la paroi arrière (6b) et les parois latérales (6c).

3. Sectionneur à coupure en charge (1) selon la revendication 2, **caractérisé en ce que** le boîtier de commutateur (6) extérieur présente des saillies de retenue (11) tournées les unes vers les autres sur la paroi de fond (6d) et destinées à être disposées sur un rail de montage.

4. Sectionneur à coupure en charge (1) selon la revendication 3, **caractérisé en ce qu'**au moins une saillie de retenue (12) déformable élastiquement est prévue pour être enclenchée dans le rail de montage.

5. Sectionneur à coupure en charge (1) selon l'une des revendications 1 à 4, **caractérisé en ce que** le mécanisme d'encliquetage (8) comporte un boîtier de mécanisme d'encliquetage (13) extérieur qui est raccordé au boîtier de commutateur (6) extérieur par le biais d'un raccordement (14) détachable, de préférence un raccordement à enclenchement.

6. Sectionneur à coupure en charge (1) selon la revendication 5, **caractérisé en ce que** le boîtier de mécanisme d'encliquetage (13) extérieur comporte un premier boîtier de mécanisme d'encliquetage (17) et une deuxième partie de boîtier de mécanisme d'encliquetage (18), lesquels sont raccordés l'un à l'autre par le biais d'un autre raccordement (19) détachable, de préférence un autre raccordement à enclenchement.

7. Sectionneur à coupure en charge (1) selon la revendication 5 ou 6, **caractérisé en ce que** le boîtier de mécanisme d'encliquetage (13) extérieur, en particulier la deuxième partie de boîtier de mécanisme d'encliquetage (18), comporte des recouvrements (20) pour des unités de serrage (7) pour le blocage de lignes de connexion sur les contacts de commutation (3) stationnaires, chaque recouvrement comportant un creux (21) pour le passage d'un outil destiné à actionner l'unité de serrage (7).

8. Sectionneur à coupure en charge (1) selon l'une des revendications 5 à 7, **caractérisé en ce que** le boîtier de mécanisme d'encliquetage (13) extérieur est raccordé, en particulier d'une seule pièce, à une saillie de fixation (22) pour la fixation du sectionneur à coupure en charge (1) sur un panneau (27), par exemple sur une porte.

9. Sectionneur à coupure en charge (1) selon la revendication 8, **caractérisé en ce qu'**il est prévu un élément de retenue (29), lequel est, dans l'état monté du sectionneur à coupure en charge (1) sur le côté (27a) du panneau (27) éloigné du boîtier de mécanisme d'encliquetage (13) extérieur, raccordé à la saillie de fixation (22).

10. Sectionneur à coupure en charge (1) selon la revendication 9, **caractérisé en ce que** le sectionneur à coupure en charge (1) comporte un premier élément de raccordement à enclenchement (30), lequel, dans l'état monté du sectionneur à coupure en charge (1) sur le panneau (27), est raccordé à un deuxième élément de raccordement à enclenchement (31) de l'élément de retenue (29).

11. Sectionneur à coupure en charge (1) selon l'une des revendications 1 à 10, **caractérisé en ce que** le mécanisme d'encliquetage (8) comporte un disque d'entraînement (23) formé en monobloc avec l'arbre d'entraînement (9).

12. Installation photovoltaïque ayant un module photovoltaïque, un onduleur et un sectionneur à coupure en charge (1) entre le module photovoltaïque et l'onduleur, **caractérisée en ce que** le sectionneur à coupure en charge (1) est constitué selon l'une des revendications 1 à 11.
